# EUROPEAN PATENT APPLICATION

(11) **EP 4 760 761 A1**
(43) Date of publication of application: **17.06.2026**
(21) Application number: 25161079.6
(22) Date of filing: 28.02.2025
(51) Int. Cl.: H01G 11/24, H01G 11/34, H01G 11/44, H01G 11/86, C01B 32/312, C01B 32/342, H01G 11/84

(54) **METHOD FOR MANUFACTURING SUPERCAPACITOR CARBON MATERIAL**

(30) Priority: 12.12.2024 TW 113148288
(71) Applicant: CPC Corporation, Taiwan, Kaohsiung City 81126 (TW)
(72) Inventor: Chen, Yan-Shi, Taiwan (TW); Kao, Yu-Ting, Taiwan (TW)
(74) Representative: Perani & Partners S.p.A.

(57) **Abstract**

A method for manufacturing a supercapacitor carbon material includes: (A), allowing heavy oil to be subjected to a first heat treatment to form a soft carbon precursor, a mesophase structure ratio of the soft carbon precursor is greater than 50%, a QI value is 95~98%, and a TI value is 89~91%; (B), grinding and grading the soft carbon precursor, then mixing it with an activator and a passivator to form a mixture; (C), activating and carbonizing the mixture to form a carbonized component, the carbonized component comprising the residual activator and passivator; (D), washing the carbonized component with water to remove the residual activator, removing the residual passivator with ethanol, then pickling and washing with water to neutral, then drying to obtain an activated carbon material; (E), allowing the activated carbon material to be subjected to a second heat treatment to form a supercapacitor carbon material.

## Description

### BACKGROUND OF THE INVENTION

### 1. Field of the Invention

The present disclosure relates to a method for manufacturing a supercapacitor carbon material.

### 2. Description of the Related Art

In recent years, energy companies are currently trying to improve the added value of asphalt or tar into carbon materials with high unit prices. For example, the applicant's earlier application in the Republic of China (Taiwan patent TWI656094B) disclosed a method for manufacturing porous carbon material, which allows isotropic asphalt to be subjected to a first heat treatment, a mixing treatment, an activation and carbonization treatment, a pickling treatment and a second heat treatment to form porous carbon material.

In the earlier application, porous carbon materials with a high specific surface area and a high capacitance value can be obtained by using activators of alkali metal hydroxides such as potassium hydroxide or sodium hydroxide. Also, the full text of the earlier application is included in the specification of the present application.

### BRIEF SUMMARY OF THE INVENTION

However, although the use of alkali metal compound activators can make the activated carbon material have a high specific surface area and a high capacitance value, it will need to be treated for alkali metal during the production process, and if an operator is not careful in the treatment, there will be a risk of explosion.

For example, due to the high reactivity of potassium metal, potassium hydroxide can easily react with carbon material during activation, resulting in the precipitation of potassium metal. When the precipitated potassium metal encounters water vapor in the environment, it is easy to cause fire starting and explosion or ignition and combustion. Therefore, there is still room for improvement in improving the safety of supercapacitor carbon materials during preparation.

Supercapacitor carbon material is a material suitable for the preparation of supercapacitors (also known as electric double-layer capacitors), which has a high energy density. Generally speaking, supercapacitors have hundreds to a thousand times higher capacity than traditional electrolytic capacitors, and those with an energy density of 10Wh/kg or more can be called supercapacitors.

Next, the present inventors found that by using calcium hydroxide (Ca(OH)₂) or magnesium hydroxide (Mg(OH)₂) added as a passivator to react with alkali metal, the alkali metal will be passivated into alkali metal oxides. Taking potassium metal as an example, the passivation reaction is as follows:

Ca(OH)₂→CaO+H₂O-------- (1);

2K+CaO→K₂O+Ca---------- (2);

K₂O+CO₂→K₂CO₃----------- (3);

Ca+1/2O₂→CaO-------------- (4).

First, it can be known from reaction (1) that calcium hydroxide can be decomposed into calcium oxide and water by heating; secondly, it can be known from reaction (2) that potassium metal reacts with calcium oxide to generate potassium oxide; also, it can be known from reaction (3) that potassium oxide and carbon dioxide further form potassium carbonate; finally, it can be known from reaction (4) that calcium can form calcium oxide with oxygen. In this way, the flammable potassium metal can be passivated into highly safe potassium carbonate and calcium oxide.

Similarly, magnesium hydroxide can also obtain the same result, and the passivation reaction is as follows:

Mg(OH)₂→MgO+H₂O-------- (5);

2K+MgO→K₂O+Mg---------- (6);

K₂O+CO₂→K₂CO₃------------ (7);

Mg+1/2O₂→MgO-------------- (8).

The main difference between the two is that the reactivity of magnesium oxide and potassium is greater than that of calcium oxide and potassium, so adding a smaller amount of magnesium hydroxide can achieve the effect of passivation. In addition, the present inventors also found that adding too much passivator may reduce the specific surface area of carbon material, so it is preferable to use magnesium hydroxide as the passivator.

In order to solve the above-mentioned problem, a method for manufacturing a supercapacitor carbon material of an aspect of the present disclosure includes: step (A), allowing heavy oil to be subjected to a first heat treatment to form a soft carbon precursor structure, a mesophase structure ratio of the soft carbon precursor structure is greater than 50%, a quinoline insoluble matter value (QI value) is between 95% and 98%, and a toluene insoluble matter value (TI value) is between 89% and 91%; step (B), grinding and grading the soft carbon precursor structure, and then mixing it with an activator and a passivator to form a mixture; step (C), activating and carbonizing the mixture to form a carbonized component, the carbonized component including the residual activator and passivator; step (D), washing the carbonized component with water to remove the residual activator, and removing the residual passivator with ethanol, and then pickling and washing with water to neutral, and then drying at 90°C for at least 16 hours to obtain an activated carbon material; step (E), allowing the activated carbon material to be subjected to a second heat treatment to form a supercapacitor carbon material.

In one embodiment, in the step (A), the temperature of the first heat treatment is 460°C-500°C, the time is 4 hours or more, and the pressure is 2atm-3atm.

In one embodiment, in the step (B), the grinding and grading is to grind and grade a particle size of the soft carbon precursor structure to 2mm-3mm, and uses particles in the particle size range for mixing.

In one embodiment, in the step (B), a weight ratio of the activator to the passivator is 2-4:1.

In one embodiment, in the step (B), a weight ratio of the soft carbon precursor structure to the passivator is 1: 0.5-2.

In one embodiment, in the step (B), the activator is potassium hydroxide or sodium hydroxide; the passivator is calcium hydroxide or magnesium hydroxide.

In one embodiment, in the step (C), the activation and carbonization treatment is carried out under nitrogen or argon, and the temperature is raised to 700 °C to 900°C at a heating rate of 1°C/min to 10°C /min.

In one embodiment, in the step (D), the time of washing the carbonized component with water is at least 1 hour to remove the residual activator; then, ultrasonic oscillation is carried out with ethanol at a concentration of 95V%-99V% for at least 1 hour to remove the residual passivator; it is followed by pickling with 1M sulfuric acid and 1M nitric acid respectively for at least 1 hour to further remove the residual activator; finally, it is washed with water to remove residual acid, so as to make the pH neutral.

In one embodiment, in the step (E), the second heat treatment is carried out under nitrogen or argon, and the temperature is raised to a temperature of less than 1000°C at a heating rate of 1°C/min to 10°C/min.

In one embodiment, in the step (E), the supercapacitor carbon material has multiple mesopores and multiple micropores, and the number of mesopores to the number of micropores is 1:3-8.

An aspect of the present disclosure is completed in view of the above-mentioned problem point of prior art, and the object is to provide a preparation method of supercapacitor carbon material, which can improve the safety of supercapacitor carbon material during preparation. Specifically, by adding the passivator, potassium metal that is easily flammable can be passivated into safe potassium carbonate, thereby improving the safety of supercapacitor carbon materials during preparation.

### BRIEF DESCRIPTION OF THE DRAWINGS

FIG. 1 is a flow chart of a method for manufacturing a supercapacitor carbon material according to the present disclosure.
FIG. 2 shows a surface texture of the mesophase structure of the soft carbon precursor structure in Preparation example 1.
FIG. 3 shows a surface texture of the mesophase structure of the soft carbon precursor structure in Preparation example 2.
FIG. 4 shows a surface texture of the mesophase structure of the soft carbon precursor structure in Preparation example 3.
FIG. 5 shows a surface texture of the mesophase structure of the soft carbon precursor structure in Preparation example 4.

### DETAILED DESCRIPTION OF THE INVENTION

The implementation of the present disclosure is illustrated by the specific embodiments as follows, so one skilled in the art may understand other advantages and effects of the present disclosure by the contents disclosed in the specification. The present disclosure may also be implemented or applied by other embodiments, and the details in the specification may also be modified and varied based on different views and applications without departing from the spirit of the present disclosure.

Unless otherwise specified herein, the term "A-B" used in the specification and the claims attached includes the meaning of "A or more and B or less". For example, the term "10-40wt%" includes the meaning of "10wt% or more and 40wt% or less".

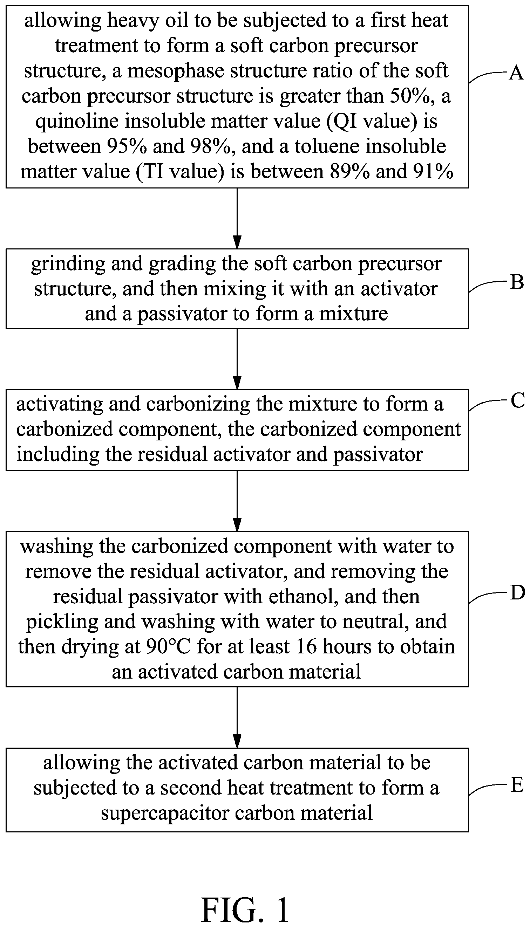

First, referring to FIG. 1, FIG. 1 is a flow chart of a method for manufacturing a supercapacitor carbon material according to the present disclosure. As shown in FIG. 1, the method for manufacturing a supercapacitor carbon material according to the present disclosure includes: step (A)-step (E). Each step is described in detail below.

### [Step (A)]

Step (A) is to allow heavy oil to be subjected to a first heat treatment to form a soft carbon precursor structure (petroleum coke). Among them, a mesophase structure ratio of the soft carbon precursor structure is greater than 50%, a quinoline insoluble matter value (QI value) is between 95% and 98%, and a toluene insoluble matter value (TI value) is between 89% and 91%. Specifically, the temperature of the first heat treatment is 460°C -500°C, the time is 4 hours or more, and the pressure is 2atm-3atm, so that the heavy oil is coking to become a soft carbon precursor structure. Also, in step (A), the temperature can be raised to a predetermined temperature (e.g., 480°C) at a heating rate of 3°C/min-10°C/min.

### [Step (B)]

Step (B) is to grind and grade the soft carbon precursor structure obtained in step (A), and then mix it with an activator and a passivator to form a mixture. Among them, the grinding may be carried out by using a high-pressure air grinder, a collision plate grinder, or an impact grinder, etc., and the grading may be carried out by using a cyclone classifier or a vibrating classifier, etc., and there is no special limitation. Through grinding and grading steps, the soft carbon precursor structure can be turned into particles with a particle size of 2mm-3mm, and the particles with this particle size can be used for subsequent mixing. In addition, the mixing can adopt a general dry or wet mixing method, for example, the soft carbon precursor structure, the activator and the passivator can be put into a 3-D mixer, and mixed for at least 30 minutes.

### (Activator)

The activator may use conventional activators used in preparing porous carbon materials. The activator can be used individually or in a mixture of multiple types, and the activator is, for example, but not limited to, alkali metal hydroxide, alkali metal carbonate, or alkali metal bicarbonate. Alkali metal hydroxides are, for example, but not limited to, potassium hydroxide (KOH) or sodium hydroxide (NaOH). Alkali metal carbonates are, for example, but not limited to, lithium carbonate (Li₂CO₃), sodium carbonate (NaCO₃), or potassium carbonate (K₂CO₃). In the present disclosure, it is preferred to use potassium hydroxide or sodium hydroxide as the activator. Also, in terms of the amount of activator used, a weight ratio of the activator to the passivator may be 2-4: 1.

### (Passivator)

As mentioned above, the present disclosure inhibits the redox (ignition combustion) reaction of alkali metals in the activator by adding a passivator. The passivator may be calcium hydroxide, magnesium hydroxide and other compounds that can be decomposed to alkaline earth metals, and there is no special limitation. Also, in terms of the amount of passivator used, a weight ratio of the passivator to the soft carbon precursor structure may be 0.5-2:1, so as to achieve the effect of passivating the alkali metal, and also to maintain a considerable degree of specific surface area of the obtained supercapacitor carbon material.

### [Step (C)]

Step (C) is to activate and carbonize the mixture obtained in step (B) to form a carbonized component, the carbonized component including the residual activator and passivator.

### (Activation and carbonization treatment)

In the activation and carbonization treatment, the mesophase structure is transformed into carbonized component after activation and carbonization. The treatment conditions for the activation and carbonization treatment are preferably carried out under nitrogen, and the temperature is raised to 700°C to 900°C at a heating rate of 1°C/min to 10°C/min. Specifically, the activation and carbonization can be carried out to heat to 800°C for 1 hour at a rate of 5°C/min in a nitrogen environment.

### [Step (D)]

Step (D) is to wash the carbonized component obtained in step (C) with water to remove the residual activator, and remove the residual passivator with ethanol, and then pickle and wash with water to neutral, and then dry at 90°C for at least 16 hours to obtain an activated carbon material. Specifically, in the step (D), the time of washing the carbonized component with water is at least 1 hour to remove the residual activator. Then, ultrasonic oscillation is carried out with ethanol at a concentration of 95V%-99V% for at least 1 hour to remove the residual passivator. It is followed by pickling with 1M sulfuric acid and 1M nitric acid respectively for at least 1 hour to further remove the residual activator. Finally, it is washed with water to remove residual acid, so as to make the pH neutral (pH=7.0).

### [Step (E)]

Step (E) is to allow the activated carbon material obtained in the step (D) to be subjected to a second heat treatment to form a supercapacitor carbon material. Through the second heat treatment, the carbon layer structure in the activated carbon material can be rearranged and repaired to form a more stable sp² structure. Also, the second heat treatment is carried out under nitrogen or argon, and the temperature is raised to a temperature of less than 1000°C at a heating rate of 1°C/min to 10°C/min and treated for 1 hour or more. Specifically, the second heat treatment is to raise a temperature to 700°C at a heating rate of 10°C/min and treated for 1 hour, and the residual functional groups (e.g., C=O, COOH, COH, COO) on the surface of the activated carbon material are removed by the second heat treatment. In addition, grinding and grading may be further carried out after drying in step (D) or before the second heat treatment in step (E), such as grinding with a collision plate grinder and grading and taking out the desired size of supercapacitor carbon material.

In addition, the specific surface area of the obtained supercapacitor carbon material can reach about 1800m²/g or more, and it can reach about 2000m²/g or more. Also, the supercapacitor carbon material has multiple mesopores and multiple micropores, and the number of mesopores to the number of micropores is about 1:3-8.

### (Embodiments)

Below, although the present disclosure is specified by various embodiments and comparative examples, the present disclosure is not limited to those embodiments and comparative examples.

### [Quinoline insoluble matter value (QI value, unit: wt%)]

The measurement is carried out according to the specification of ASTM D7280-06 (2011), the specific content can refer to the Taiwan patent TWI656094B. Quinoline insoluble matter value=(weight of filter cake/weight of heavy oil)×100%.

### [Toluene insoluble matter value (TI value), unit: wt%]

The measurement is carried out according to the specification of ASTM D4312-95a (2010), the specific content can refer to the Taiwan patent TWI656094B.

### [Mesophase structure measurement]

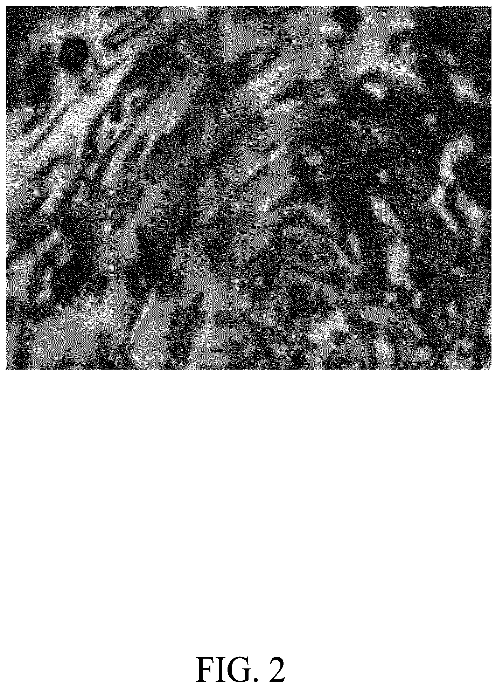

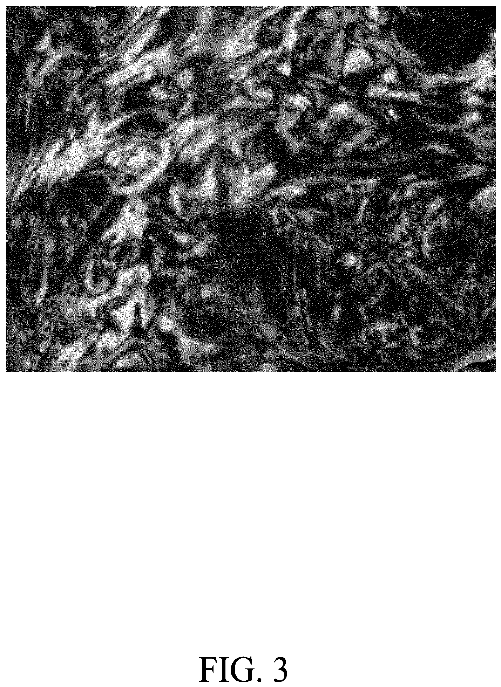

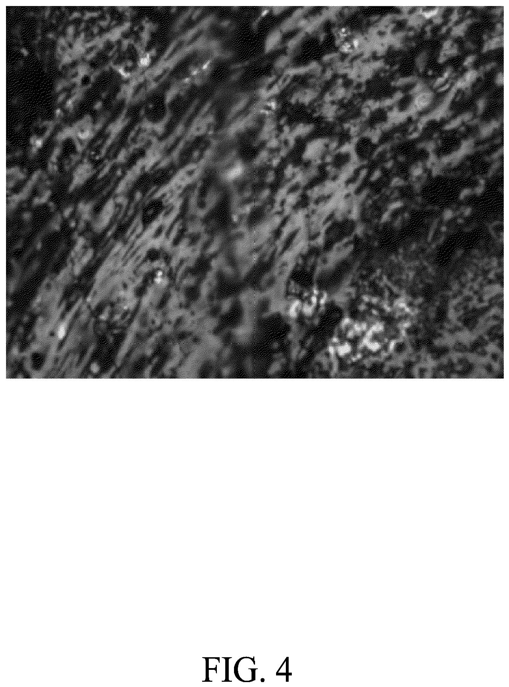

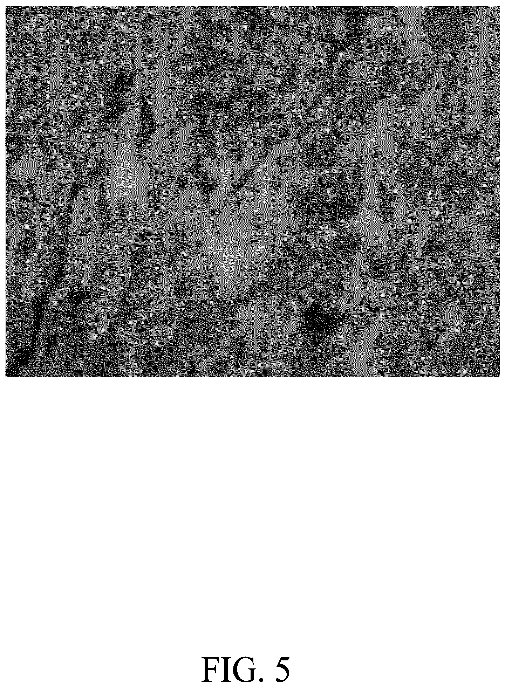

First, a polarizing microscope (Brand: Nikon Polarizing Microscope; Model: Eclipse LV100POL) is used to observe and photograph the soft carbon precursor structures of Preparation examples 1 to 4, as shown in FIGS. 2 to 5. Next, according to the ASTM D4616-95 (2013) standard test method, the mesophase structures in the soft carbon precursor structures of Preparation examples 1 to 4 are analyzed, and the proportion of the mesophase structure is calculated. Also, in FIGS. 2 to 5, the black areas are in-phase structures, and the non-black areas are mesophase structures.

### [Specific surface area]

A nitrogen adsorption and desorption instrument (Brand: Micromeritics Instrument Corp. USA; Model: ASAP 2020M) is used to measure the supercapacitor carbon material, the specific content can refer to the Taiwan patent TWI656094B.

### [Total pore volume, number of micropores, and number of mesopores]

The above parameters can be measured by the traditional methods, and the specific content can refer to the Taiwan patent TWI656094B. Among them, the proportion of micropores is (pore volume of micropores with a hole width of 2 nm or less/total pore volume)×100%, and the proportion of mesopores is 100%-the proportion of the micropores.

### <Preparation of soft carbon precursor structures>

### <Preparation examples 1-4>

Referring to Table 1 below, under a fixed pressure of 2-3atm, the heavy oil is heated to 450°C, 550°C, 480°C and 580°C at a heating rate of 3°C-10°C/min for 4 hours to form soft carbon precursor structures 1-4 of Preparation examples 1-4, respectively. Also, based on FIGS. 2 to 5, the mesophase structure ratios in the soft carbon precursor structures 1-4 (non-black areas) are calculated. Among them, FIG. 2 to FIG. 5 show the surface textures of the mesophase structures of the soft carbon precursor structures 1-4 of Preparation examples 1-4, respectively.

**[Table 1]**

| | Preparation example 1 | Preparation example 2 | Preparation example 3 | Preparation example 4 |
|---|---|---|---|---|
| first heat treatment (°C) | 450°C | 550°C | 480°C | 580°C |
| Pressure (atm) | 2-3 | 2-3 | 2-3 | 2-3 |
| TI value | 95.0 | 99.6 | 89.9 | 96.4 |
| QI value | 78.1 | 97.4 | 96.4 | 88.8 |
| Mesophase structure ratio (%) | approximately 65% | approximately 60% | approximately 52% | approximately 85% |

As can be seen from Table 1 above, since the heating range of Preparation examples 1, 2 and 4 is not within the scope of the application, a soft carbon precursor structure 3 with a mesophase structure ratio greater than 50%, a QI value between 95%-98% and a TI value of 89%-91% can be obtained through a specific first heat treatment step. Then, the soft carbon precursor structure 3 is used for subsequent Embodiments and Comparative examples.

### <Embodiment 1>

Based on the above steps (B)-(E), the supercapacitor carbon material 1 of Embodiment 1 is obtained. Specifically, 500g of a soft carbon precursor structure with a particle size of 2mm-3mm after grinding and grading, 2000g of an activator (KOH) with an average particle size of 1mm-10mm, and 750g of a passivator (Ca(OH)₂) with an average particle size of 5µm-8µm are taken and put into a 3-D mixer for mixing at least 30 minutes, that is, a weight ratio of the activator to the passivator is 2.67:1, and a weight ratio of the soft carbon precursor structure to the passivator is 1:1.5. Next, the temperature is raised to 800°C at a heating rate of 5 °C/min for carrying out carbonization and activation for 1 hour, and then the product is washed with water to remove most of the activation reagents, and the time of water washing is at least 1 hour. Then, ultrasonic oscillation is carried out with ethanol at a concentration of 95V%-99V% for at least 1 hour to remove the residual passivator. It is followed by pickling with 1M sulfuric acid and 1M nitric acid respectively for at least 1 hour to further remove the residual activator. Afterward, it is washed with water to remove residual acid and rinsed to make the pH neutral (pH=7.0), followed by drying at 90°C for at least 16 hours to obtain an activated carbon material. Finally, a second heat treatment is carried out on the activated carbon material (in a nitrogen environment, the temperature is raised to 700°C at a heating rate of 10°C/min and treated for 1 hour) to obtain the supercapacitor carbon material 1 of Embodiment 1.

Next, the specific surface area, the number of micropores and the number of mesopores are measured for the supercapacitor carbon material 1 in the above way, and the results are sorted out in Table 2 below. In addition, in the activation and carbonization steps of Embodiment 1, the ignition reaction of the alkali metal of the activator is not occurring.

### <Embodiment 2>

Except for adjusting the amount of passivator (Ca(OH)₂) to 1000g, that is, the weight ratio of the activator to the passivator is 2:1 and the weight ratio of the soft carbon precursor structure to the passivator is 1:2, the supercapacitor carbon material 2 of Embodiment 2 is obtained in the same way as in Embodiment 1. Next, the specific surface area, the number of micropores and the number of mesopores are measured for the supercapacitor carbon material 2 in the above way, and the results are sorted out in Table 2 below. In addition, in the activation and carbonization steps of Embodiment 2, the ignition reaction of the alkali metal of the activator is not occurring.

### <Comparative example 1>

Except for adjusting the amount of passivator (Ca(OH)₂) to 250g, that is, the weight ratio of the activator to the passivator is 8:1 and the weight ratio of the soft carbon precursor structure to the passivator is 2:1, the supercapacitor carbon material A of Comparative example 1 is obtained in the same way as in Embodiment 1. Next, the specific surface area, the number of micropores and the number of mesopores are measured for the supercapacitor carbon material A in the above way, and the results are sorted out in Table 2 below. In addition, in the activation and carbonization steps of Comparative example 1, the ignition reaction of the alkali metal of the activator occurs.

### <Comparative example 2>

Except for adjusting the amount of passivator (Ca(OH)₂) to 500g, that is, the weight ratio of the activator to the passivator is 4:1 and the weight ratio of the soft carbon precursor structure to the passivator is 1:1, the supercapacitor carbon material B of Comparative example 2 is obtained in the same way as in Embodiment 1. Next, the specific surface area, the number of micropores and the number of mesopores are measured for the supercapacitor carbon material B in the above way, and the results are sorted out in Table 2 below. In addition, in the activation and carbonization steps of Comparative example 2, the ignition reaction of the alkali metal of the activator occurs.

### <Embodiment 3>

Except for changing the passivator from Ca(OH)₂ to Mg(OH)₂, the supercapacitor carbon material 3 of Embodiment 3 is obtained in the same way as in Embodiment 1. Next, the specific surface area, the number of micropores and the number of mesopores are measured for the supercapacitor carbon material 3 in the above way, and the results are sorted out in Table 2 below. In addition, in the activation and carbonization steps of Embodiment 3, the ignition reaction of the alkali metal of the activator is not occurring.

### <Embodiment 4>

Except for adjusting the amount of passivator (Mg(OH)₂) to 500g, that is, the weight ratio of the activator to the passivator is 4:1 and the weight ratio of the soft carbon precursor structure to the passivator is 1:1, the supercapacitor carbon material 4 of Embodiment 4 is obtained in the same way as in Embodiment 3. Next, the specific surface area, the number of micropores and the number of mesopores are measured for the supercapacitor carbon material 4 in the above way, and the results are sorted out in Table 2 below. In addition, in the activation and carbonization steps of Embodiment 4, the ignition reaction of the alkali metal of the activator is not occurring.

### <Embodiment 5>

Except for adjusting the amount of passivator (Mg(OH)₂) to 1000g, that is, the weight ratio of the activator to the passivator is 2:1 and the weight ratio of the soft carbon precursor structure to the passivator is 1:2, the supercapacitor carbon material 5 of Embodiment 5 is obtained in the same way as in Embodiment 3. Next, the specific surface area, the number of micropores and the number of mesopores are measured for the supercapacitor carbon material 5 in the above way, and the results are sorted out in Table 2 below. In addition, in the activation and carbonization steps of Embodiment 5, the ignition reaction of the alkali metal of the activator is not occurring.

### <Comparative example 3>

Except for adjusting the amount of passivator (Mg(OH)₂) to 250g, that is, the weight ratio of the activator to the passivator is 8:1 and the weight ratio of the soft carbon precursor structure to the passivator is 2:1, the supercapacitor carbon material C of Comparative example 3 is obtained in the same way as in Embodiment 3. Next, the specific surface area, the number of micropores and the number of mesopores are measured for the supercapacitor carbon material C in the above way, and the results are sorted out in Table 2 below. In addition, in the activation and carbonization steps of Comparative example 3, the ignition reaction of the alkali metal of the activator occurs.

**[Table 2]**

| | Specific surface area (m²/g) | Micropores (%) | Mesopores (%) | The number of mesopores : the number of micropores | Ignition reaction |
|---|---|---|---|---|---|
| Embodiment 1 | 1458 | 79 | 21 | 1 : 3.76 | No occurrence |
| Embodiment 2 | 1089 | 75 | 25 | 1 : 3.00 | No occurrence |
| Comparative example 1 | 2252 | 79 | 21 | 1 : 3.76 | Occurrence |
| Comparative example 2 | 1842 | 78 | 22 | 1:3.54 | Occurrence |
| Embodiment 3 | 1828 | 88 | 12 | 1 : 7.34 | No occurrence |
| Embodiment 4 | 1965 | 82 | 18 | 1 : 4.56 | No occurrence |
| Embodiment 5 | 1627 | 84 | 16 | 1 : 5.25 | No occurrence |
| Comparative example 3 | 2178 | 77 | 23 | 1 : 3.35 | Occurrence |

As can be seen from Table 2, in Embodiment 1 to Embodiment 5, the ignition reaction of the alkali metal of the activator in step (C) (activation and carbonization treatment) can be inhibited by adding a specific proportion of passivator. In addition, compared with Embodiments 1 to 2 in which Ca(OH)₂ is added, the supercapacitor carbon materials obtained from Embodiments 3 to 5 in which Mg(OH)₂ can maintain a higher specific surface area, which is conducive to obtaining supercapacitor carbon materials with both high specific surface area and high capacitance value while improving the safety when preparing the supercapacitor carbon material.

### [Applications of supercapacitors]

According to the content described in the Taiwan patent TWI656094B, the supercapacitor carbon materials of Embodiments 1 and 4 are prepared into electrodes for supercapacitors and supercapacitors, and the specific capacitance (unit: F/g) is measured. The result is found that the supercapacitor carbon materials of Embodiments 1 and 4 of the present disclosure are subjected to the test of component characteristics, and the specific capacitance value under a high current (43.75A/g) characteristic can respectively reach about 80F/g and about 90F/g; and the energy density of the two can reach about 25Wh/kg when operating at 10,000W/Kg of power and about 15Wh/kg when operating at 50,000W/kg of power.

By the preparation method of the present disclosure, the alkali metal that is easily flammable can be passivated into safe potassium carbonate, thus improving the safety of the preparation of supercapacitor carbon materials.

The present invention is not limited to the above-mentioned embodiments, and various changes may be made within the scope indicated in the claims, and the embodiments obtained by appropriately combining the technical means disclosed in the different embodiments are also included in the technical scope of the present invention.

While the present disclosure has been described by means of specific embodiments, numerous modifications and variations could be made thereto by those skilled in the art without departing from the scope and spirit of the present disclosure set forth in the claims.

## Claims

1. A method for manufacturing a supercapacitor carbon material, comprising:
step (A), allowing heavy oil to be subjected to a first heat treatment to form a soft carbon precursor structure, a mesophase structure ratio of the soft carbon precursor structure is greater than 50%, a quinoline insoluble matter value (QI value) is between 95% and 98%, and a toluene insoluble matter value (TI value) is between 89% and 91%;
step (B), grinding and grading the soft carbon precursor structure, and then mixing it with an activator and a passivator to form a mixture;
step (C), activating and carbonizing the mixture to form a carbonized component, the carbonized component comprising the residual activator and passivator;
step (D), washing the carbonized component with water to remove the residual activator, and removing the residual passivator with ethanol, and then pickling and washing with water to neutral, and then drying at 90°C for at least 16 hours to obtain an activated carbon material;
step (E), allowing the activated carbon material to be subjected to a second heat treatment to form a supercapacitor carbon material.

2. The method for manufacturing the supercapacitor carbon material according to claim 1, wherein in the step (A), the temperature of the first heat treatment is 460°C -500°C, the time is 4 hours or more, and the pressure is 2atm-3atm.

3. The method for manufacturing the supercapacitor carbon material according to claim 1, wherein in the step (B), the grinding and grading is to grind and grade a particle size of the soft carbon precursor structure to 2mm-3mm, and uses particles in the particle size range for mixing.

4. The method for manufacturing the supercapacitor carbon material according to claim 1, wherein n the step (B), a weight ratio of the activator to the passivator is 2-4:1.

5. The method for manufacturing the supercapacitor carbon material according to claim 1, wherein in the step (B), a weight ratio of the soft carbon precursor structure to the passivator is 1: 0.5-2.

6. The method for manufacturing the supercapacitor carbon material according to claim 1, wherein in the step (B), the activator is potassium hydroxide or sodium hydroxide; the passivator is calcium hydroxide or magnesium hydroxide.

7. The method for manufacturing the supercapacitor carbon material according to claim 1, wherein in the step (C), the activation and carbonization treatment is carried out under nitrogen or argon, and the temperature is raised to 700°C to 900°C at a heating rate of 1°C/min to 10°C /min.

8. The method for manufacturing the supercapacitor carbon material according to claim 1, wherein in the step (D), the time of washing the carbonized component with water is at least 1 hour to remove the residual activator; then, ultrasonic oscillation is carried out with ethanol at a concentration of 95V%-99V% for at least 1 hour to remove the residual passivator; it is followed by pickling with 1M sulfuric acid and 1M nitric acid respectively for at least 1 hour to further remove the residual activator; finally, it is washed with water to remove residual acid, so as to make the pH neutral.

9. The method for manufacturing the supercapacitor carbon material according to claim 1, wherein in the step (E), the second heat treatment is carried out under nitrogen or argon, and the temperature is raised to a temperature of less than 1000°C at a heating rate of 1°C/min to 10°C/min.

10. The method for manufacturing the supercapacitor carbon material according to claim 1, wherein in the step (E), the supercapacitor carbon material has multiple mesopores and multiple micropores, and the number of mesopores to the number of micropores is 1:3-8.
